# EUROPÄISCHE PATENTANMELDUNG

(11) **EP 4 388 887 A1**
(43) Veröffentlichungstag der Anmeldung: **26.06.2024**
(21) Anmeldenummer: 22215475.9
(22) Anmeldetag: 21.12.2022
(51) Int. Cl.: A23J 1/00, A23J 3/14, A23J 3/18, A23J 3/30, A23J 3/34, C12F 3/06

(54) **VERFAHREN ZUR GEWINNUNG VON PROTEINKONZENTRAT, PROTEINMEHL UND GERSTENÖL AUS NASSEN BIERTREBERN**

(71) Anmelder: Citerco Partners LP, D02XT91 Dublin (IE)
(72) Erfinder: SKVORTCOV, Igor, 76228 Karlsruhe (DE); NAZAROVA, Ekaterina, 76227 Karlsruhe (DE)
(74) Vertreter: Jeck, Jonathan

(57) **Zusammenfassung**

Die Erfindung betrifft ein Verfahren zur Herstellung von Proteinkonzentrat, Proteinmehl und Gerstenmehl aus Biertreber.

## Beschreibung

Die Erfindung betrifft ein Verfahren zur Gewinnung von Proteinkonzentrat, Proteinmehl und Gerstenöl aus nassen Biertrebern, insbesondere die Verarbeitung von Brauereiabfällen.

Die Erfindungsgruppe bezieht sich auf die Lebensmittelindustrie. Sie ermöglicht eine hocheffiziente Verarbeitung des Hauptabfalls der Brauindustrie, des Biertrebers, zur Gewinnung von drei Hauptprodukten. Dies sind Proteinkonzentrat, Proteinmehl und Gerstenöl. Proteinprodukte werden in der Lebensmittelindustrie häufig verwendet, um Backwaren, Fleischprodukte und Milchprodukte mit Eiweiß anzureichern. Gerstenöl ist hochwirksam bei der Verwendung in der Parfümerie- und Kosmetikindustrie.

In der Brauindustrie fällt bei der Bierherstellung eine große Menge Abfall an. Dieser besteht aus den Resten der Getreideschale und dem wasserunlöslichen Nahrungsanteil des Getreides, nämlich den protein- und fettreichen Biertrebern. Unter allen Sekundärrohstoffen der Brauindustrie ist der Biertreber für die Verarbeitung von größtem Interesse. Er fällt in großen Mengen an. Auf 1.000 kg Gerstenmalz kommen im Durchschnitt 1.300 kg Biertreber.

Biertreber werden in der letzten Phase der Filtration der Biermaische nach der Verzuckerung des Gerstenmalzes gemäß der Technologie der Bierherstellung gewonnen. Biertreber mit einem Feuchtigkeitsgehalt von 85 % enthält in seiner Zusammensetzung mindestens 15 % Trockenmasse. Diese besteht hauptsächlich aus Eiweiß, Ballaststoffen und Fetten. Jährlich produzieren die Brauereien der Welt zig Millionen Tonnen Biertreber. Davon wird der größte Teil als Futtermittel für die Tierhaltung verwendet. Ein Teil der Biertreber wird recycelt, was erhebliche Umweltschäden verursacht.

Derzeit wird nativer Biertreber nicht in großem Umfang verwendet, da es schwierig ist, ihn zu transportieren und zu lagern. Bereits schon nach sechs Stunden setzen Gärungsprozesse im Biertreber ein. Dadurch wird der Biertreber für die weitere Verwendung ungeeignet.

Aus dem Stand der Technik sind weit verbreitete Verfahren zur Verarbeitung von Biertreber als Futtermittelzusatzstoff bekannt. Diese basieren auf einer Biertrebertrocknung mit anschließender Granulierung oder Vermahlung (EP0694609A2; WO9822751A1; WO2010053493A1; WO2010117288A1). EP3915391A1 (RU2730134) beschreibt ein aus Biertreber hergestelltes Proteinkonzentrat, das einen Feuchtigkeitsgehalt von max. 7% aufweist und Proteine, Fette, Ballaststoffe und Asche enthält; gleichzeitig beträgt der Proteingehalt in einer solchen Suspension min. 50 % Gew. Das Verfahren zur Herstellung dieses Proteinkonzentrats zeichnet sich dadurch aus, dass der Ausgangs-Biertreber aufgelockert wird, um eine homogene Masse zu erhalten, mechanische Verunreinigungen entfernt werden, anschließend die Masse zur Herstellung unter Zugabe von Wasser oder Zentrat gemahlen wird eine pastöse Masse mit einem Feuchtigkeitsgehalt von max. 95 % erhalten wird; dann wird die Masse von der gemahlenen Schale befreit und eine Suspension hergestellt; dann wird die Suspension einer Vibrationsfiltration unterzogen und getrocknet, um ein Konzentrat mit einem Feuchtigkeitsgehalt von max. 7 % mit Proteinen, Fetten, Ballaststoffen und Asche zu erhalten. Mit diesen Methoden ist es jedoch nicht möglich, das ernährungsphysiologische Potenzial des Biertrebers vollständig zu nutzen. Die unverdaulichen Ballaststoffe, die 80 % des Biertrebers ausmachen, können nicht vom Nahrungsbestandteil des Biertrebers getrennt werden. In dieser Form ist es nur möglich, Biertreber in der Tierhaltung einzusetzen. Darüber hinaus verursachen die Fette, die in getrockneten Biertrebern in einem Gehalt von mindestens 8 % enthalten sind, Störungen im Verdauungssystem der Tiere. Diese erlauben es nicht, die erforderliche Menge an Biertrebern in das Futter der Tiere einzubringen. Außerdem erfordert das Trocknen von Biertrebern einen erheblichen Energieverbrauch. Dabei handelt es sich um einen Prozess, der mit geringem Gewinn bei einem niedrigen Preis für das Endprodukt einhergeht.

Methoden zur Weiterverarbeitung von Brauereiabfällen sind aus dem Stand der Technik bekannt. Insbesondere gibt es ein Verfahren zur Verarbeitung von flüssigem Biertreber mit einem Feuchtigkeitsgehalt von 90 - 92 %. Dieses sieht die Verarbeitung des Rohmaterials durch zweistufiges Pressen vor, in der ersten Stufe auf einen Feuchtigkeitsgehalt von 70 - 75 % und in der zweiten Stufe auf einen Feuchtigkeitsgehalt von 40 - 45 %. Weiterhin ist ein zweistufiges Trocknen vorgesehen, in der ersten Stufe auf einen Feuchtigkeitsgehalt von 20 - 25 % und in der zweiten Stufe auf einen Feuchtigkeitsgehalt von 10 % unter Erhalt eines Trockenfutterzusatzes (RU2215426). Ein Nachteil dieser Methode ist, dass beim Pressen des Rohmaterials eine erhebliche Menge an Protein aus der Zusammensetzung des Konzentrats entfernt wird. Für dessen Reinigung werden zusätzliche Konzentratverarbeitungskapazitäten benötigt. Darüber hinaus ist das Endprodukt auch reich an unlöslichen Ballaststoffen und Fett.

Ein Verfahren zur Herstellung eines Proteinprodukts aus Biertreber mit einem Proteingehalt von 60 % bis 90 % ist aus dem Stand der Technik bekannt (WO2018136234A1). Das Verfahren besteht in der chemisch-thermischen Behandlung von Biertrebern. Dafür wird ein Gemisch aus gebrauchtem Getreide und Wasser unter ständigem Rühren in den Hydrolysetank gegeben. Danach wird Glucoamylase zugegeben und das daraus resultierende Gemisch auf eine Temperatur von 30° C bis 70° C erhitzt. Die Getreidepartikel werden in das Gemisch auf eine durchschnittliche Größe von weniger als 500 Mikron gemahlen. Dann wird der pH-Wert des Gemisches auf etwa 7 bis 10,5 eingestellt. Eine alkalische Protease wird zugegeben, um das Protein zu lösen. Die resultierende Mischung wird durch ein Sieb mit einem Lochdurchmesser von 5 bis 500 µm geleitet. Danach wird eine Ultrafiltration unter Verwendung von Membranen mit einer Porengröße von 20 KDA bis 40 KDA durchgeführt, gefolgt von einer Nanofiltration. Ein Nachteil der Methode ist die Notwendigkeit des Einsatzes von anspruchsvollen und teuren Geräten sowie ein langer Technologiezyklus zur Gewinnung eines Proteinprodukts von 60 - 105 Minuten. Davon dauern die Zerkleinerung 30 bis 60 Minuten und die Hydrolyse 30 bis 45 Minuten. Ein weiterer Nachteil ist die Verwendung von gefährlichen Substanzen im Prozess, d. h. von Salz- oder Carbonsäuren und Alkali. Es ist auch bekannt, dass bei der Proteinhydrolyse alle langen Aminosäureketten zerstört werden. Die Proteinverluste während der Hydrolyse betragen bis zu 70 %. Außerdem wird bei der Verarbeitung von Biertreber eine große Menge an Wasser verwendet, von 8 : 1 bis 11 : 1 im Verhältnis zu Biertreber. Dadurch entsteht eine erhebliche Menge an Konzentrat, das ein Produktionsabfall ist. Für die Entsorgung sind zusätzliche Geräte erforderlich.

Es gibt auch eine Proteinzusammensetzung, die aus Abfallgetreiderohstoffen bei der Bierherstellung gewonnen wird. Sie enthält 40 bis 60 % Proteine, 12 bis 18 % Fette, 2 bis 6 % Fasermaterialien und 1 bis 4 % Asche in Bezug auf das Trockengewicht (Herstellungsverfahren EP0694609A2). Das Verfahren besteht in der Pressung von Biertrebern mit einem Walzenstuhl bei gleichzeitiger Nassschälung der Getreidekörner und anschließender Trennung des entstandenen Produktes von der Spelze. Ein Nachteil des Verfahrens ist, dass beim Pressen mit Walzenstühlen ein Teil der verwertbaren Bestandteile aus den Biertrebern entfernt wird, da die Biertreber vor dem Pressen nicht gequetscht werden und ein Teil des Eiweißes in den gepressten Spelzenpartikeln gebunden ist. Daher kommt es bei der anschließenden Spelzenentfernung zu einem Verlust von Eiweiß. Zusätzlich wird zur effizienteren Abtrennung der Schale nach einer bekannten Methode die resultierende Mischung (flüssige Proteinsuspension) mit einer großen Menge Wasser gewaschen. Die resultierende Suspension wird durch Siebe gesiebt. Der Wasch- und Siebvorgang muss bis zu fünfmal wiederholt werden. Dadurch entsteht eine große Menge an Konzentrat, das als Produktionsabfall anfällt. Für dessen Entsorgung werden zusätzliche Anlagen benötigt, um die Aufbereitung des Konzentrats zu gewährleisten.

Aus der DE 3644600 A1 ist ein Verfahren zum Gewinnen von Ballaststoffen aus Biertreber bekannt. Das Verfahren umfasst die Zugabe von heißem Wasser zum Biertreber in einem Verhältnis von 1:1. Weiterhin gehören zum Verfahren ein intensives Mischen, Sieben, um Protein zu entfernen, Pressen, um Feuchtigkeit zu entfernen und das Trocknen der erhaltenen Fasern, die als Ballaststoffe verwendet werden können. Dieses Verfahren zielt nicht darauf ab, Proteine zu gewinnen, sondern es bleiben Proteine als Abfall übrig. Ferner benötigt das Verfahren die Zugabe von zusätzlichem Wasser. Dieses wird während der Durchführung des Prozesses wieder entzogen bzw. muss als verschmutztes Wasser entzogen werden. Ferner ist in den erhaltenen Produkten immer noch Fett enthalten, das die Verwendung als Futtermittel für Tiere wegen der Belastung des Verdauungssystem beeinträchtigt.

So zielen alle existierenden Biertreber-Behandlungsmethoden auf die Gewinnung von Proteinpulvern oder -konzentraten ab. Diese zeichnen sich durch die Komplexität und Dauer der Proteinextraktion, eine hohe Ausbeute an Konzentrat, das ein Abfallprodukt ist, aus. Für dessen Entsorgung ist eine zusätzliche Ausrüstung erforderlich.

Der Stand der Technik hat keine hochwirksamen Verfahren zur Gewinnung von Endprodukten aus Biertreber in Form von Proteinkonzentrat und Proteinmehl offenbart, die sich durch einen hohen Proteingehalt auszeichnen und die in großem Umfang als Nahrungsergänzungsmittel und Futtermittelzusatzstoff verwendet werden können. Außerdem wird bei keiner der bekannten Methoden das Gerstenöl im Prozess als separates Produkt gewonnen.

Die Erfindung wird durch die beigefügten Ansprüche definiert.

Mit Biertreber bezeichnet man in der Lebensmitteltechnik die bei der Bierherstellung anfallenden Rückstände des Braumalzes. Biertreber enthält Spelzen, ungelöste Anteile des Gersten- oder Weizenmalzes und koaguliertes, unlösliches Protein.

Offenbart wird ein Verfahren zur Herstellung von Proteinkonzentrat und Proteinmehl aus Biertreber. Es umfasst:
a. das Bereitstellen von Biertreber;
b. das Mahlen des Biertrebers. Der Schritt umfasst insbesondere das Mahlen des Biertrebers bis zu einer Korngröße von geringer als 1, 0,5, oder 0,1 mm. Dabei wird in dem Verfahren bis zum Erreichen dieser Korngröße dem Biertreber nichts zugegeben;
c. die Zugabe von wässriger Flüssigkeit zu dem gemahlenen Biertreber;
d. das Erhalten einer Suspension aus gemahlenem Biertreber und wässriger Flüssigkeit;
e. das Auftrennen der Suspension in einen unlöslichen und einen löslichen Teil;
f. das Verarbeiten des unlöslichen Teils zu einem Proteinmehl und des löslichen Teils zu einem Proteinkonzentrat.

Das Verfahren bietet den Vorteil, dass bis zum Abschluss des Vermahlens kein Wasser, keine wässrige Lösung oder Suspension, keine Konzentrate oder sonst irgendein Zusatz hinzugefügt werden muss, also auch weder flüssiges Wasser noch Wasserdampf. Es werden insbesondere keine im weiteren Verfahren downstream angefallenen Materialien wie Lösungen, Suspensionen, oder Konzentrate währen des Mahlvorgangs eingesetzt. Es konnte festgestellt werden, dass dadurch die Menge des aus dem Biertreber gewonnen Proteins im Endprodukt erhöht werden konnte gegenüber Verfahren, bei denen bereits bei einem ersten Mahlschritt flüssiges Wasser, wässrige Lösungen, oder Wasserdampf hinzugefügt wird. Insbesondere die Zugabe von Wasserdampf erfordert eine aufwendigere Konstruktion und verursacht zusätzliche Kosten für Konstruktion und Energieverbrauch.

Durch das Verfahren wird eine effizientere Wiederverwertung von Brauereiabfällen erreicht. Es wird dadurch ermöglicht, auch Gerstenöl mittels dieses Verfahrens zu gewinnen. Die Gewinnung von Gerstenöl war in bisherigen Verfahren nicht vorgesehen.

Der als Ausgangprodukt verwendete Biertreber kann 60 - 90 Gew. % Wasser enthalten. Er kann innerhalb von 6 Stunden nach seiner Produktion verwendet werden. Der Biertreber kann beim Eintritt in die Produktion und/oder während des Mahlens 0,5 bis 90° C aufweisen. Das Mahlen des Biertrebers kann in einer Mahlvorrichtung (hiernach auch Mahlprozessor genannt) erfolgen. Nach Abschluss des Mahlens kann der Biertreber einen mittleren Partikeldurchmesser von 0,01 - 5 mm aufweisen. Nach dem Mahlen kann der Biertreber als pastöse homogene Masse (d. h. als Schlämme) vorliegen. Die Viskosität der pastösen Masse beträgt 500 - 1500 cps (gemessen bei 30° C in Typ B Viskosimeter). Die Mahlvorrichtung kann bei 5000 - 6000 U/Min, insbesondere bei 5600 U/Min., betrieben werden.

Die Zugabe von wässriger Flüssigkeit, insbesondere Wasser, kann in einer Aufschlämmungsvorrichtung erfolgen, in die die pastöse Masse überführt wird. Die Aufschlämmungsvorrichtung kann ein Durchflussmischer sein. Wässrige Flüssigkeit kann im Verhältnis von 1 : 0,25 bis 1 : 0,75 oder 1 : 0,3 bis 1 : 0,5 (wässrige Flüssigkeit : pastöser Masse) zugegeben werden. Die wässrige Flüssigkeit kann frische wässrige Flüssigkeit und/oder wässrige Flüssigkeit sein, die, wie unten beschrieben, im weiteren Verlauf des Verfahrens zurückgewonnen wird. Durch das Aufschlämmen wird eine Suspension, d. h. Aufschlämmung, erhalten.

Die aufgeschlämmte Masse (auch Suspension genannt) kann in eine Vorrichtung zur Trennung von löslichen und unlöslichen Anteilen der aufgeschwemmten Masse, insbesondere eine Pressvorrichtung, überführt werden. Das Überführen kann durch eine Pumpe, insbesondere eine Impellerpumpe, erreicht werden. Die Pressvorrichtung kann eine Bandpresse sein. Diese umfasst die Pressmittel wie Walzen und als Andrückfläche eine Siebvorrichtung. Der Druck in der Pressvorrichtung kann 5 - 10 bar betragen. Die Pressvorrichtung kann Presswalzen enthalten. Dabei wird über diese die Suspension mehrfach (2 bis 5-fach) ausgepresst. Das Sieb kann 25 - 75 oder 30 - 50 Öffnungen (d. h. Löcher) pro 1 cm² enthalten. Durch den Druck wird der lösliche Anteil aus der Suspension gedrückt. Der unlösliche Anteil bleibt zurück. Zum Beispiel tritt der lösliche Anteil durch das Sieb, während der unlösliche Anteil auf dem Sieb zurückbleibt.

Der lösliche Anteil weist einen Wasseranteil (Feuchtigkeitsgehalt) von 90 - 99 Gew. % oder 93 - 95 Gew. % auf.

Der unlösliche Anteil weist einen Wasseranteil (Feuchtigkeitsgehalt) von 80 - 99 Gew. % oder 85 - 90 Gew. % auf.

Der unlösliche Teil wird zu einem Proteinmehl und der lösliche Teil zu einem Proteinkonzentrat verarbeitet. Dies kann erfolgen, indem im nächsten Schritt den jeweiligen Anteilen der Suspension Flüssigkeit z. B. in entsprechende Vorrichtungen entzogen wird. In diese werden der lösliche bzw. der unlösliche Teil unter Abtrennung von Flüssigkeit überführt.

Beim unlöslichen Anteil (der als tabuläre bzw. tafelartige Masse vorliegt) kann dies einstufig z. B. über einen Trockner mit Hohlschaufeln erfolgen. Bei diesem liegt die Temperatur des Mediums (z. B. Wasserdampf oder Öl) zum Trocknen, z. B. des Mediums in den Hohlschaufeln, bei 160 - 180° C. Dies ermöglicht eine besonders effiziente, rasche und schonende Trocknung des unlöslichen Anteils. Die verdampfte Flüssigkeit kann im Aufschwämmungsschritt wiederverwendet werden. Der Entzug der Flüssigkeit aus dem löslichen Anteil kann zweistufig erfolgen. Dabei kann die zweite Stufe dem Entzug des Wassers aus dem unlöslichen Teil entsprechen.

In der ersten Stufe kann Flüssigkeit über einen (Dekanter-)Separator erfolgen. Dabei wird als Trocknungsprodukt ein Lebensmittelkuchen mit einem Feuchtigkeitsgehalt von 78 - 80 Gew. % Wasser und recycelte Flüssigkeit mit einem Feuchtigkeitsgehalt von 99 - 100 % oder 99 - 99,8 Gew. % erhalten. Die recycelte Flüssigkeit kann im Aufschwämmungsschritt wiederverwendet werden.

Die zweite Stufe kann dem Entzug des Wassers aus dem unlöslichen Teil entsprechen.

Am Ende dieser Schritte zur Entziehung von Flüssigkeit können der Proteinkuchen (aus löslichem Anteil gewonnen) und die plastischen Massen (aus unlöslichem Anteil gewonnen) jeweils einen Feuchtigkeitsanteil von 2 - 3 Gew. % aufweisen.

Daher kann Schritt 1.f ferner umfassen: Entzug der wässrigen Flüssigkeit aus dem löslichen Teil der Suspension und optionales Wiederverwenden der entzogenen Flüssigkeit in Schritt 1.c.

Daher kann Schritt 1.f ferner umfassen: Entzug der wässrigen Flüssigkeit aus dem unlöslichen Teil der Suspension und optionales Wiederverwenden der entzogenen Flüssigkeit in Schritt 1.c.

Das Wiederverwenden des Wassers ermöglicht unter anderem eine effiziente Kreislaufwirtschaft und verringert oder verhindert die Zugabe von externem Wasser. Dadurch können ökologische und ökonomische Vorteile erreicht werden. Ferner wurde überraschend festgestellt, dass die wässrige Flüssigkeit, die dem löslichen Teil oder unlöslichen Teil der Suspension entzogen wird, sowohl gelöstes Protein als auch Öl (z. B. Fettsäuretriglyzeride) in relevanten Mengen umfasst. Die genannte wässrige Flüssigkeit enthält 1 - 5 Gew.-%, 1,5 - 3 Gew.-% oder 1.5 - 2,5 Gew.-% Protein und 1 - 5 Gew.-%, 2 - 4 Gew.-% oder 2.5 - 3,5 Gew.-% (Gersten-) Öl. Durch die Rückführung der wässrigen Flüssigkeit, umfassend (gelöstes) Protein und Öl, erfolgt eine Erhöhung der Ausbeute an Protein und Öl im Endprodukt. Die Rückführung der wässrigen Flüssigkeit in das Verfahren anstelle von reinem Wasser, wie oft im Stand der Technik, ermöglicht z. B. eine Erhöhung des Proteingehalts um 1,0 - 1,5 % und des Ölgehalts um 2,0 - 2,5 % im Proteinmehl und Proteinkonzentrat.

Insgesamt liefert dieses Verfahren drei Vorteile: eine Erhöhung des Protein- und Öl-gehalts im Endprodukt, die Einsparung einer natürlichen Ressource (Wasser in einer Menge von 50 - 100 Tonnen pro 50 Tonnen Getreide) und keine Notwendigkeit, ein Aufbereitungssystem zu bauen, dessen Kosten bis zu 10 % der Gesamtkosten der Produktion erreichen können.

Bei der Durchführung des Verfahrens kann die Verwendung eines Homogenisators ausgeschlossen sein. Ein Homogenisator (Behandlung des Eduktes mit mindestens 90 bar) ergibt ein homogenes Mahlen aller Komponenten der Pellets, von denen mindestens 70 % Fasern sind. Homogenisieren bewirkt, dass die zerkleinerten Fasern gleichmäßig über das Hauptprodukt - Protein - verteilt werden. Selbst ein weiteres Sieben ermöglicht es nicht, die Fasern richtig zu trennen, da die Vibration des Vibrationssiebs aufgrund seiner Wirkung Faserpartikel bis zu 200 Mikron durchlässt. Darüber hinaus beträgt der Feuchtigkeitsgehalt der abgetrennten Faser mindestens 80 - 83 %. Das bedeutet, dass die Fasern nicht nur Wasser, sondern auch in Wasser gelöstes Protein und Fett enthalten. Gemäß dem erfindungsgemäßen Verfahren können die Fasern von der Suspension mit einer (Band-)Presse getrennt werden. Dabei kann die Trennung bei einem Druck von 3 - 5 bar auf mehreren Walzen der Presse, normalerweise 3 oder 4 Walzen, erfolgen. Daher ist die Verwendung einer Bandpresse mit 2 - 6 Walzen besonders bevorzugt, da auf diese Weise das gelöste Protein besonders effizient abgetrennt werden kann.

Gleichzeitig erreicht der Feuchtigkeitsgehalt der gepressten Faser 40 - 45 %, was zweimal weniger ist als der Feuchtigkeitsgehalt der durch Sieben getrennten Produkte. Außerdem enthält die gepresste Feuchtigkeit bis zu 3 % Protein und bis zu 4 % Öl. Das erhöht den Gesamtgehalt an Protein und Fett in der Suspension auf 48 - 50 % Protein und bis zu 16 - 17 % Fett. Somit bewirkt der Verzicht auf einen Schritt des Homogenisierens den Vorteil, dass das erhaltene Konzentrat überraschenderweise mehr Protein enthält. Die Ausbeute an Gerstenöl, das mit den unten beschriebenen Schritten gewonnen werden kann, wird erhöht.

Der erhaltene Proteinkuchen und die erhaltene plastische Masse können in einem feuchtigkeitsdichten Behälter bis zur weiteren Verwendung gelagert werden.

Das Verfahren zur Gewinnung von Fetten aus Biertreber kann auch umfassen:
Durchführen des Verfahrens wie oben beschrieben, wobei der Schritt gemäß Anspruch 1 f. ferner die Gewinnung von Gerstenöl aus den unlöslichen und löslichen Teilen der Suspension aus Schritt e des Anspruchs 1) mit einem organischen Lösungsmittel umfasst.

Dieser Schritt weist mindestens zwei Vorteile auf. Durch die Abtrennung von Öl durch (Ethanol-)Extraktion aus den Endprodukten kann der Proteingehalt im Proteinkonzentrat auf 70 % (statt 62 - 63 %, wenn Fett vorhanden ist) und im proteinreichen Mehl auf 25 % angehoben werden (statt 17 - 19 %, wenn es Fett enthält). Außerdem wird Öl als zusätzliches separates Produkt gewonnen und kann in der kosmetischen Industrie bestimmungsgemäß verwendet und nicht zusammen mit Protein in die Tierernährung überführt werden.

Das organische Lösungsmittel kann z. B. Ethanol sein. Dabei können sowohl der Proteinkuchen als auch die plastische Masse jeweils in einer entsprechenden Vorrichtung zur Extraktion des Gerstenöls mit organischem Lösungsmittel versetzt werden. Zum Beispiel kann organisches Lösungsmittel, insbesondere Ethanol, in einem Verhältnis von 2.5 : 1 - 4 : 1 oder ungefähr 3 : 1 zu dem Proteinkuchen bzw. der plastischen Masse hinzugegeben werden.

Dabei entsteht durch die Lösung des Gerstenöls im organischen Lösungsmittel eine Miscella (Lösung aus Gerstenöl und organischem Lösungsmittel). Im Extraktor kann eine Temperatur vorliegen, die 1 - 3° C über der Verdampfungstemperatur des Lösungsmittels liegt, also bei Ethanol z. B. 78,3° C. Dabei ist der Extraktor von der Atmosphäre abgeschlossen. Folglich kann ein Überdruck von 2 - 3 bar entstehen.

Durch den von der Atmosphäre abgeschlossenen Extraktor (und dem resultierenden Überdruck) erfolgt die Extraktion zwei- bis dreimal schneller als ohne Überdruck. Der Schritt kann daher nur ca. 30 Min betragen und kann bei 69 - 71° C und 2,8 - 3,2 bar durchgeführt werden. Das ermöglicht eine energieeffiziente Extraktion von Gerstenöl. Die Miscella kann dann entnommen werden. Der Extraktionsschritt kann mit jeweils frischem, organischem Lösungsmittel noch mindestens 2 oder genau 2mal wiederholt werden. Das Verwenden von insgesamt 3 Extraktionsschritten hat sich als besonders effizient erwiesen.

Ferner kann die Effizienz der Extraktion weiter verbessert werden, indem der Extraktor eine Trommel mit rotierenden Klingen oder Schaufeln umfasst. Anschließend kann das Gerstenöl vom organischen Lösungsmittel abgetrennt werden. Dies kann über einen Vakuumverdampfer erfolgen.

Das abgetrennte organische Lösungsmittel kann dann bei Bedarf wiederverwendet werden. Daher kann der Schritt gemäß Anspruch 1f ferner umfassen: Entzug des organischen Lösungsmittels aus der Lösung aus Lösungsmittel und Gerstenöl und optionales Wiederverwenden des entzogenen organischen Lösungsmittels in dem Entzugsschritt.

Der mit organischem Lösungsmittel extrahierte Proteinkuchen wird als Proteinkonzentrat beschrieben (hervorgegangen aus dem löslichen Anteil der Suspension). Daher wird auch ein Proteinkonzentrat, erhältlich durch das oben beschriebene Verfahren, offenbart.

Das Proteinkonzentrat kann weniger als 2 Gew. % Flüssigkeit, einen Teilchendurchmesser von weniger als 0,2 mm, Fett, Ballaststoffe und/oder mindestens 70 Gew. % Protein umfassen.

Das Proteinkonzentrat kann, bezogen auf sein Trockengewicht, nicht mehr als 2,8 Gew. % Fasern, nicht mehr als 0,54 Gew. % Fett, und/oder der Aminosäuregehalt kann nicht weniger als 71,7 Gew. % umfassen.

Das Proteinkonzentrat umfasst insgesamt 55 - 65 Gew. % Aminosäuren.

Die mit organischem Lösungsmittel extrahierte plastische Masse wird als Proteinmehl beschrieben (hervorgegangen aus dem unlöslichen Anteil der Suspension). Daher wird auch Proteinmehl erhältlich durch das Verfahren wie oben beschrieben offenbart.

Das Proteinmehl kann weniger als 2 Gew. % Flüssigkeit, einen Teilchendurchmesser von weniger als 0,2 mm, Fett, Ballaststoffe und/oder mindestens 25 Gew. % Protein umfassen.

Das Proteinmehl kann bezogen auf sein Trockengewicht nicht mehr als 14,9 Gew. % Fasern, nicht mehr als 1,.47 Gew. % Fett und/oder der Aminosäuregehalt nicht weniger als 25,24 Gew. % umfassen.

Das Proteinmehl kann insgesamt 20 - 30 Gew. % Aminosäuren umfassen.

Offenbart ist auch Gerstenöl, das durch das oben beschriebene Verfahren erhältlich ist.

Das Gerstenöl kann 50 - 60 Gew. % oder 55 - 57 Gew. % Linolsäure sowie 13 - 18 Gew. % oder 15 - 17 Gew. % Ölsäure umfassen. Das Gerstenöl kann nicht weniger als 56,28 Gew. % Linolsäure, nicht weniger als 16,7 Gew. % Ölsäure und/oder nicht weniger als 700 mg/100 ml Vitamin E umfassen.

Die Gewinnung von Gerstenöl aus den unlöslichen und löslichen Teilen der Suspension mit einem organischen Lösungsmittel kann die Verwendung eines Extraktors mit rotierenden Messern umfassen.

Das technische Ergebnis der beanspruchten Erfindung besteht darin, verarbeitete Biertreber in Form eines Proteinkonzentrats mit einem Proteingehalt von mindestens 70 % im Trockenrückstand, Proteinmehl mit einem Proteingehalt von mindestens 25 % im Trockenrückstand und Gerstenöl mit einem Vitamin-E-Gehalt von mindestens 700 mg pro 100 ml zu erhalten.

Insbesondere besteht die Technologie der Verarbeitung von Biertrebern zur Gewinnung eines Proteinkonzentrats mit einem Feuchtigkeitsgehalt von nicht mehr als 8 % und einem Proteingehalt von nicht weniger als 70 %, eines Proteinmehls mit einem Feuchtigkeitsgehalt von nicht mehr als 8 % und einem Proteingehalt von nicht weniger als 25 %, eines Gerstenöls mit einem Vitamin-E-Gehalt von nicht weniger als 690 mg pro 100 ml darin, dass Biertreber in ihrer nativen Form mit einem Feuchtigkeitsgehalt von 60 - 90 % einer feinen Zerkleinerung mit einem Zerkleinerungsprozessor unterzogen werden. Dann wird der resultierende Brei mit Wasser im Verhältnis 1 : 1 gemischt. Die daraus resultierende Suspension wird einem mehrstufigen Pressen unter Verwendung eines Bandpressfilters unterzogen, um die Suspension in eine Nahrungsmittelfraktion mit einem Feuchtigkeitsgehalt von 85 - 95 % zu trennen. Diese enthält in ihrer Zusammensetzung die meisten der Proteinsubstanzen von Biertrebern mit einem Proteingehalt von mindestens 65 % in der Trockensubstanz und unlösliche Fasern mit einem Proteingehalt von mindestens 25 % in der Trockensubstanz. Danach wird die Suspension in einem kontinuierlichen Dekanter-Separator entwässert und in einen Proteinkuchen mit einem Feuchtigkeitsgehalt von nicht mehr als 80 % und ein Lebensmittekonzentrat mit einem Feuchtigkeitsgehalt von nicht weniger als 99 % getrennt. Dann werden der Proteinkuchen und die unlöslichen Fasern einer schnellen Trocknung in kontinuierlichen Schaufeltrocknern unterzogen, um ein Proteinkonzentrat mit einem Feuchtigkeitsgehalt von nicht mehr als 2 % und ein Proteinmehl mit einem Feuchtigkeitsgehalt von nicht mehr als 2 % zu erhalten. Weiterhin werden aus dem Proteinkonzentrat und dem Proteinmehl durch das Verfahren der zyklischen 3-stufigen Alkoholextraktion mit Ethanol unter Verwendung eines zyklischen Rührwerksextraktor-Verdampfers Fette entfernt. Diese machen 8 - 12 % der Zusammensetzung des Konzentrats und des Mehls aus. Nach dem Verdampfen des restlichen Ethanols hat das Proteinmehl einen Proteingehalt von mindestens 30 %. Die durch die Extraktion gewonnene Miscella enthält 90 - 92 % Ethanol. Diese wird in einem speziell entwickelten Verdampfer einer Ethanolverdampfung unterzogen. Sie ermöglicht es, mindestens 98 % des Ethanols zurückzugewinnen und Gerstenöl mit einem Ethanolgehalt von nicht mehr als 2 % zu erhalten.

Bei allen Produkten kann es sich sowohl um gebrauchsfertige Produkte als auch um Zwischenprodukte handeln, aus denen Proteinmischungen mit hohem Proteingehalt und kosmetische Präparate mit Gerstenöl hergestellt werden können. In diesem Fall ist die Technologie absolut abfallfrei, da das bei der Entwässerung durch den Dekanter-Separator entstehende Konzentrate und die bei der Trocknung von Zwischenprodukten verdampfte Feuchtigkeit in den Prozess zurückfließen.

Das technische Ergebnis kann mittels eines Proteinkonzentrats, Proteinmehls und Gerstenöls erzielt werden, die aus Biertreber mit einem Feuchtigkeitsgehalt von 80 - 90 % und einer Partikelgröße von bis zu 10 mm gewonnen werden.

In diesem Fall ist die optimale Zusammensetzung der Proteinprodukte die folgende Menge im Trockenrückstand, Gew.-% (Tabelle 1).

**Tabelle 1**

| Name | Protein, % | Faser, % | Fett, % |
|---|---|---|---|
| Konzentrat | nicht weniger als 70 | nicht mehr als 3 | nicht mehr als 0,5 |
| Mehl | nicht weniger als 25 | nicht mehr als 15 | nicht mehr als 1,5 |

In diesem Fall ist die optimale Zusammensetzung des Gerstenöls wie folgt (Tabelle 2).

**Tabelle 2**

| Name | Inhalt |
|---|---|
| Säurenummer | nicht mehr als 25 mg KOH/g |
| Peroxid-Zahl | nicht mehr als 2,0 mmol aktives O/kg |
| Summe der Tocopherole und Tocotrienole (Vitamin E) | nicht weniger als 690 mg/100 g |
| Palmitinsäure C16:10 | nicht weniger als 23,7 % |
| Ölsäure C18:10 | nicht weniger als 22,9 % |
| Linolsäure C18:3 | nicht weniger als 56,2 % |

Das technische Ergebnis kann auch durch das Verfahren zur Gewinnung eines Proteinkonzentrats, Proteinmehls und Gerstenöls erzielt werden. Das besteht darin, dass der ursprüngliche Rohstoff, nativer Biertreber, einer feinen Vermahlung in einem Mahlprozessor unterzogen wird. Dann wird die resultierende Aufschlämmung mit Wasser in einem Durchflussmischer in einem Verhältnis von 1 : 0,3 - 1 : 0,5 (Aufschlämmung/Wasser) verdünnt. Die entstandene Suspension wird mittels einer Schnecken- oder Impellerpumpe in einen Bandpressfilter gepumpt. Auf diesem erfolgt eine mehrstufige Trennung der flüssigen Fraktion der Suspension vom festen Teil der Suspension. Die flüssige Fraktion mit einem Feuchtigkeitsgehalt von 93 - 96 % und einem Proteingehalt von mindestens 70 % wird von einer Dosierpumpe zu einem kontinuierlichen Dekanter-Separator gepumpt. Darauf wird die flüssige Suspension zu einem Kuchen mit einem Feuchtigkeitsgehalt von 78 - 80 % entwässert. Das Lebensmittelkonzentrat (von der Suspension abgetrennte Feuchtigkeit) wird auf der Stufe des Mischens der Aufschlämmung mit Wasser in einem Durchflussmischer zurück in den Prozess geleitet. Gleichzeitig wurde Biertreber mit einem Mahlprozessor der Firma Urschel Laboratories (USA), Modell Comitrol 1700, mit einer Mahlkopf-Rotationsfrequenz von ca. 5600 U/min, Motorleistung 29 kW, 3-Phasen-Netz 50 Hz, gemahlen. In diesem Fall erfolgte eine mehrstufige Trennung der flüssigen Fraktion der Suspension vom festen Teil der Suspension auf einer Bandpresse der Firma T.C. Environmental Inc. (China), Modell DNY 2.0, Pressbandbreite 2000 mm, Motorleistung 3,2 kW, 3-Phasen-Netz 50 Hz. Gleichzeitig wurde die Proteinsuspension in einem kontinuierlichen Dekanter-Separator der Firma KOSUN (China), Modell DC450-1900 mit einer Zentrifugiergeschwindigkeit von 3400 U/min, Motorleistung 22 kW, 3-Phasen-Netz 50 Hz, entwässert.

Der mit dem kontinuierlichen Dekanter-Separator gewonnene Proteinkuchen wird im Schaufeltrockner der Firma ZHENXING (China) weiter auf einen Feuchtigkeitsgehalt von 2 % getrocknet und in den Lagerbehälter für Proteinkonzentrat überführt. Die aus der Suspension verdampfte Feuchtigkeit wird in einem Vorratsbehälter kondensiert und in einem Durchflussmischer dem Prozess zugeführt.

Der feste Teil der nach der Bandpresse erhaltenen Suspension mit einem Feuchtigkeitsgehalt von nicht mehr als 60 % und einem Proteingehalt von nicht weniger als 25 % wird in einem Schaufeltrockner weiter auf einen Feuchtigkeitsgehalt von 2 % dehydriert. Er wird dann in einen Vorratsbehälter für Proteinmehl überführt. Die aus der Suspension verdampfte Feuchtigkeit wird in einem Vorratsbehälter kondensiert und in einem Durchflussmischer dem Prozess zugeführt.

In diesem Fall wurden der Proteinkuchen und der feste Teil der Suspension in einem Schaufeltrockner der Firma Changzhou Haomai Drying Engineering Co. (China), Modell KJG-70, mit einer Schaufelrate von 0,4 - 10 U/min, Motorleistung 2,2 kW und 3-Phasen-Netz 50 Hz getrocknet.

Das gleiche technische Ergebnis kann durch Extraktion von Fett aus Proteinkonzentrat und Proteinmehl (Entfettungsprodukte) durch kontinuierliche Extraktion eines trockenen Produkts mit einem Feuchtigkeitsgehalt von nicht mehr als 2 % in Ethanol erzielt werden. Die Extraktion wird in einem Paddelextraktor in zwei Stufen durchgeführt:
● Stufe 1 - Zugabe des Trockenprodukts und des Ethanols in den Extraktor.

Das Verhältnis der Masse des Trockenprodukts zur Masse des Ethanols beträgt 1 : 3. Die Extraktionszeit beträgt 30 Minuten bei einem Druck von 2 bar und einer Temperatur von 80° C. Danach erfolgt das Absetzen der Mischung im Extraktor für 3 Stunden und danach das Ablassen der Miscella in den Vorratsbehälter.
● Stufe 2 - Zugabe in den Extraktor zu der nach dem Ablassen der Miscella verbliebenen Ethanolmischung.

Das Verhältnis der Masse des Produkts zur Masse des Ethanols beträgt 1 : 2. Die Extraktionszeit beträgt 10 Minuten bei einem Druck von 2 bar und einer Temperatur von 80° C. Anschließend erfolgt das Absetzen der Mischung im Extraktor für 3 Stunden und danach das Ablassen der Miscella in einen Lagertank.

Das gleiche technische Ergebnis kann durch anschließendes Eindampfen von Ethanol aus dem extrahierten Produkt direkt im Extraktor für 3 Stunden bei einer Temperatur von 80° C und einem Druck von 0,9 bar erreicht werden. Der erforderliche Feuchtigkeitsgehalt nach der Trocknung beträgt nicht mehr als 2 %. Außerdem wird durch die Trocknung der extrahierten Materialien Ethanol zurückgewonnen und in den technischen Prozess zurückgeführt. Das technische Ergebnis der Produktentfettung kann für beide Produkte, Proteinkonzentrat und Proteinmehl, auf die gleiche Weise erreicht werden. Das Fett wurde aus den trockenen Produkten mit einem Feuchtigkeitsgehalt von 2 % extrahiert. Die fettfreien Produkte wurden mit der Anlage von Zhenxing Drying Equipment Co., Ltd. getrocknet, Modell Customized GPG7000, mit einer Drehzahl von 0,4 - 30 U/min, Motorleistung 45 kW und 3-Phasen-Netz 50 Hz.

Das technische Ergebnis, um Ethanol zurückzugewinnen und dem Prozess wieder zuzuführen, kann auch durch Eindampfen von Ethanol aus Miscella in einem Vakuumverdampfer erreicht werden. Durch das Eindampfen von Ethanol aus Miscella erhält man auch reines Gerstenöl mit einem Ethanolgehalt von nicht mehr als 2 %. Die Verdampfung erfolgt bei einer Miscella-Temperatur von nicht mehr als 80° C und einem Druck von 0,9 bar für 3 Stunden oder bis der Feuchtigkeitsgehalt des Endprodukts 2 % erreicht. Fertigprodukte, Eiweißkonzentrat und Eiweißmehl werden in Lagerbehältern gelagert. Ethanol wurde aus der Miscella auf unserem selbst entwickelten Verdampfer mit einer Leistung von 7 kW und einem 3-Phasen-50-Hz-Netz evaporiert.

Die entstehenden Proteinprodukte, das Proteinkonzentrat und das Proteinmehl zeichnen sich durch einen hohen Proteingehalt aus. Sie sind in einem effizienten und technisch wirtschaftlichen Prozess gewonnen. Dabei fällt kein verwertbarer Abfall an. Das Konzentrat und Kondensat werden in den Prozess zurückgeführt.

Das resultierende Gerstenöl zeichnet sich durch einen hohen Vitamin-E-Gehalt und durch Unbedenklichkeit aus, da zur Extraktion genießbares Ethanol verwendet wird.

Die Erfindung wird nun anhand der beigefügten Zeichnung näher erläutert. Es zeigt:

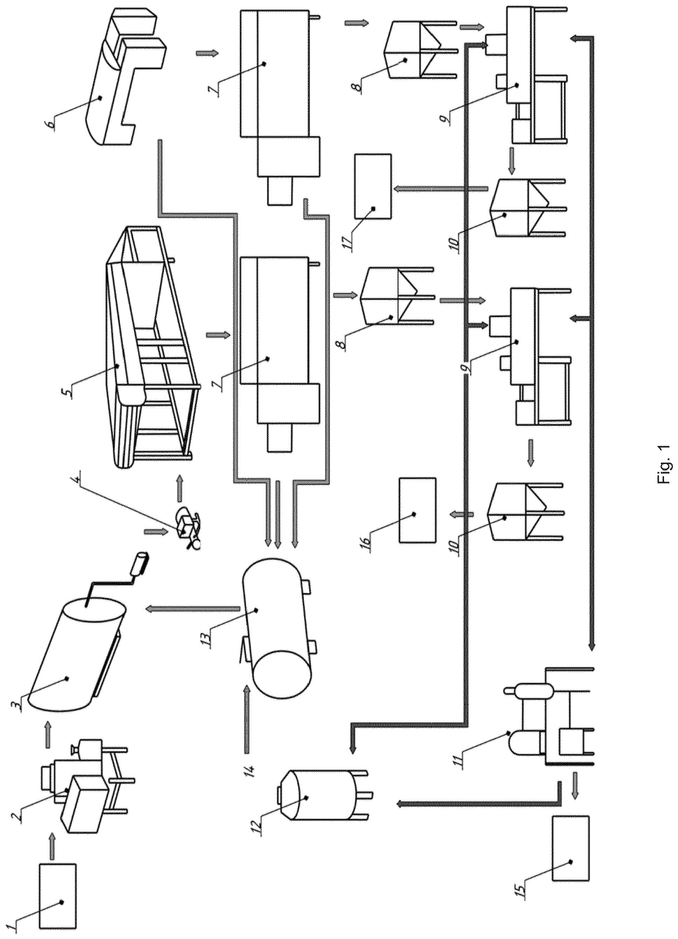

- Fig. 1: das Schema einer Produktionslinie zur Durchführung der beanspruchten Verfahren. Dabei ist,
1 Ausgangsmaterial (nativer Biertreber)
2 ein Mahlprozessor,
3 ein Durchlaufmischer,
4 eine Impellerpumpe,
5 eine Bandpresse,
6 ein kontinuierlicher Dekanter-Separator,
7 ein Schaufeltrockner,
8 ein Vorratsbehälter für Proteinkonzentrat und Proteinmehl,
9 ein Paddelextraktor,
10 ein Vorratsbehälter für Proteinkonzentrat und Proteinmehl,
11 ein Vakuumverdampfer für Ethanol aus Miscella,
12 ein Tank mit Ethanol,
13 ein Tank zum Umwälzen von Wasser und Sammeln von Konzentrat und Kondensat,
14 ein Leitungswassereinlass, und
15 Gerstenöl.

### Beispiel 1

Mit Biertreber bezeichnet man in der Lebensmitteltechnik die bei der Bierherstellung anfallenden Rückstände des Braumalzes. Biertreber enthält die Spelzen, die ungelösten Anteile des Gersten- oder Weizenmalzes, und das koagulierte, unlösliche Protein.

Im Folgenden wird die angegebene Erfindung näher beschrieben. Das schränkt den Umfang des Anspruchs der angegebenen Erfindung nicht ein, sondern zeigt die Möglichkeit der Umsetzung der Erfindung mit dem Erreichen des beanspruchten technischen Ergebnisses auf.

Der ursprüngliche Biertreber mit einem Feuchtigkeitsgehalt von 60 - 90 % wird vor dem Ablauf von 6 Stunden nach seinem Erhalt verarbeitet (ab dem Zeitpunkt seiner Entstehung als Abfall der Bierproduktion). Die Temperatur des Biertrebers beim Eintritt in die Produktion kann 0,5 bis 90 Grad betragen. Die Biertreber 1 (Fig. 1) werden in den Mahlprozessor 2 (Fig. 1) manuell oder maschinell mit einem gleichmäßigen Durchfluss geladen. Dadurch wird eine ordnungsgemäße Vermahlung der Biertreber auf eine Fraktion von 0,01 - 0,5 mm gewährleistet. Die Temperatur der im Mahlprozessor behandelten Biertreber kann 0,5 bis 90 Grad betragen. Der Feuchtigkeitsgehalt von Biertreber für die Verarbeitung in einem Mahlprozessor kann im Bereich von 60 - 95 % liegen. Im Mahlprozessor 2 erfolgt eine feine Vermahlung von Biertrebern, um eine pastöse homogene Masse, eine Schlämme, zu erhalten. Deren Viskosität liegt im Bereich von 500 - 1500 cps. Die Biertreber werden im Mahlprozessor 2 mit einer Geschwindigkeit von 5600 U/min gemahlen. Dadurch wird eine dicke, flüssige Konsistenz des Schlamms für eine maximale Extraktion der Nahrungsfraktion der Biertreber aus dem Ausgangsmaterial in der folgenden Verarbeitungsstufe, der Bandpresse 5, erreicht (Fig. 1).

Nach dem Mahlprozessor 2 fließt die fertige Aufschlämmung durch die Schwerkraft in den Durchflussmischer 3 (Fig. 1). In diesem wird der Aufschlämmung Wasser im Verhältnis 1 : 0,3 - 1 : 0,5 (Aufschlämmung/Wasser) zugesetzt. Dem Durchlaufmischer 3 wird Wasser aus dem Vorratsbehälter 13 (Fig. 1) zugeführt. Dieser wird mit Leitungswasser und gewässerten Rückständen der Verarbeitung in den Stufen der Suspensionsentwässerung auf einem kontinuierlichen Dekanter-Separator 6 (Konzentrat) und Schaufeltrocknern 7 (Kondensat) aufgefüllt. Nach dem kontinuierlichen Dekanter-Separator 6 ist das Konzentrat eine leicht trübe, helle Flüssigkeit mit einem Feuchtigkeitsgehalt von 99 - 99,8 %, mit einer Temperatur von 50 - 70° C und mit mikroskopischen Einschlüssen des Nahrungsmittelbestandteils von Biertreber, einschließlich Eiweiß und Fett. Es ist technisch unmöglich, diese in einem kontinuierlichen Dekanter-Separator 6 vom Wasser zu trennen. Aus einer Tonne Schlämme werden ca. 850 - 900 Liter Konzentrat erzeugt. Das Kondensat nach dem Schaufeltrockner 7 ist eine leicht trübe, helle Flüssigkeit mit einem Feuchtigkeitsgehalt von 99,8 - 99,9 %, mit einer Temperatur von 70 - 90° C und geringen mikroskopischen Einschlüssen des Nahrungsmittelbestandteils von Biertreber, einschließlich Protein und Fett. Kondensation tritt während des Verdampfungsprozesses aus dem Lebensmittelkuchen beim Trocknen des Kuchens auf einem Schaufeltrockner auf. Aus 1 Tonne Kuchen werden ca. 730 - 770 Liter Kondensat evaporiert. Das Konzentrat und das Kondensat sind eine sehr wertvolle Ressource, die im Kreislauf der Technologie verwendet wird. Sie ermöglicht es, das von der Technologie verbrauchte Leitungswasser einzusparen, die Produktion der Endprodukte der Technologie um 1,0 - 1,5 % zu erhöhen und die Notwendigkeit der Entsorgung von Konzentrat und Kondensat vollständig zu eliminieren. Dadurch werden Ressourcen eingespart, die bei der Reinigung von Konzentrat und Kondensat vor der Einleitung in die Kanalisation notwendig sind.

Nach dem Durchlaufmischer 3 wird die Suspension mit der Impellerpumpe 4 (Fig. 1) zur Bandpresse 5 (Fig. 1) gepumpt. Auf der Bandpresse 5 wird die Suspension in einer gleichmäßigen Schicht auf einem Pressband mit einer Dicke von 2 - 3 mm ausgebreitet. Sie wird anschließend durch Presswalzen mit einem Druck von 5 - 10 bar wiederholt ausgepresst. Das Band hat über die gesamte Fläche ca. 30 - 50 Löcher pro 1 cm² mit einem Durchmesser von 0,01 mm, durch die die Lebensmittelkomponente der Suspension in die Palette der Bandpresse gedrückt wird. Dabei wird diese Suspension danach weiter in den Prozess überführt. Die Suspension hat einen Feuchtigkeitsgehalt von 93 - 95 % und bildet eine weitere Grundlage für das Proteinkonzentrat. Der unlösliche Anteil der Suspension (Spelze, Gerstengranne) wird auf dem Band zurückgehalten und nach mehrmaligem Abquetschen mit einem stationären Abstreifer über die gesamte Bandfläche vom Band abgeschabt. Anschließend wird diese plastische Masse in die Aufnahmewanne der Bandpresse gekippt und dem Prozess weiter zugeführt. Die plastische Masse hat einen Feuchtigkeitsgehalt von 85 - 90 %. Sie bildet eine weitere Grundlage für das Proteinmehl.

Die Nahrungsmittelsuspension (löslicher Anteil der Suspension) wird nach der Bandpresse 5 mit einem Feuchtigkeitsgehalt von 93 - 95 % durch Schwerkraft (der Einsatz einer Dosierpumpe ist möglich) einem kontinuierlichen Dekanter-Separator 6 (Fig. 1) zugeführt. Dort wird sie in einem kontinuierlichen Prozess entwässert, um einen Lebensmittelkuchen mit einem Feuchtigkeitsgehalt von 78 - 80 % und recyceltes Konzentrat mit einem Feuchtigkeitsgehalt von 99 - 99,8 % zu erhalten. Die Suspension wird mit den eingestellten Parametern des kontinuierlichen Dekanter-Separators 6 wie folgt entwässert:
- Innentrommel des Dekanters 450 mm;
- Betriebsdrehzahl 3200 U/min;
- Trennfaktor nicht kleiner als 3000;
- Leistung des Hauptelektromotors 22 kW;
- Leistung des elektrischen Hilfsmotors 7,5 kW.

Bei der Entwässerung wird der Kuchen kontinuierlich auf den Boden des Dekanters 6 überführt. Anschließend wird er manuell oder durch ein beliebiges automatisiertes Verfahren (Band- oder Schneckenförderer) in den Schaufeltrockner 7 für den Kuchen überführt (Fig. 1). Das Konzentrat fließt kontinuierlich per Schwerkraft durch die Rohrleitung in den Vorratsbehälter 13. Dort wird es ständig mit Leitungswasser vermischt.

Die auf der Bandpresse 5 gewonnene plastische Masse (auch tabulare Masse genannt) wird dann manuell oder durch ein beliebiges automatisiertes Verfahren (Band- oder Schneckenförderer) in den Schaufeltrockner 7 für die tabulare Masse überführt (Fig. 1).

Die Schaufeltrockner 7 für Kuchen und tabulare Masse sind völlig identisch.

In Schaufeltrocknern wird der Kuchen oder die tabulare Masse gleichmäßig mit der Übertragung der Hochtemperatur-Hohlschaufeln des Kühlmittels im Inneren der Schaufeln und auch des Heizmantels des Trockners durch die Hohlschaufeln vermischt (Das Kühlmittel kann heißes Wasser mit einer Temperatur von 95 - 98° C oder Wasserdampf mit einer Temperatur von 140 - 150° C oder heißes Öl mit einer Temperatur von 160 - 180° C sein). Wenn Wärme auf die Trocknungsprodukte (Kuchen oder tabulare Masse) übertragen wird, verdampft Feuchtigkeit aus den Produkten. Die effektivste Methode ist die Verwendung von heißem Öl mit einer Temperatur von 160 - 180° C als Wärmemedium. In diesem Fall erfolgt die Erwärmung des verdampften Rohmaterials auf die Temperatur der Wasserverdampfung von 100° C 2 - 3mal schneller als bei der Verwendung von heißem Wasser oder Dampf als Wärmemedium. Die verdampfte Feuchtigkeit wird im Kondensator des Trockners kondensiert und durch Schwerkraft in den Vorratsbehälter 13 abgeleitet. Dort wird sie mit Leitungswasser gemischt und dann im Prozess verwendet.

Nach dem Verdampfen der Feuchtigkeit aus den Kuchen und plastischen Rohmaterialien gelangen trockene Produkte mit einem Feuchtigkeitsgehalt von 2 - 3 % in die Lagertanks 8 (Fig. 1). Die Tanks sind komplett versiegelt. Sie verhindern, dass Feuchtigkeit aus der Umgebungsluft in die getrockneten Lebensmittel gelangt.

Sobald sich im Trichter eine ausreichende Menge an trockenem Produkt angesammelt hat, werden die trockenen Produkte mittels pneumatischer Fördersysteme oder einer anderen Methode zur Übergabe trockener staubförmiger Produkte in die Schaufel-Extraktoren 9 (Fig. 1) überführt.

Das Volumen der Füllung des Extraktors 9 mit dem Trockenprodukt beträgt 50 % des Gesamtvolumens des Extraktors 9. Nach dem Befüllen des Extraktors 9 mit trockenem Produkt wird das Produkt im Extraktor gemischt. Das beginnt mit der Zugabe von Ethanol aus dem Ethanolbehälter 12 (Fig. 1). Ethanol wird in einer Menge von 3 Litern Ethanol pro 1 kg Trockenprodukt zugegeben. Bei der Zugabe von Ethanol und dem Mischen einer trockenen Produktmischung mit Ethanol mit einer Geschwindigkeit von 0,5 - 1,5 U/min. beginnt sich das Produktfett in Ethanol zu lösen. Dadurch entsteht eine Miscella, eine Mischung aus Ethanol und Fetten. Um die Extraktion zu beschleunigen, wird das Gemisch des Extraktors 9 durch den Heizmantel des Extraktors auf eine Gemischtemperatur von 80° C erhitzt. Da die Verdampfungstemperatur von Ethanol 78,3° C beträgt, entsteht bei 80° C durch das Sieden des Ethanols ein Überdruck im Extraktor. Das Sieden endet bei einem Druck von 2 - 3 bar. Bei einer erhöhten Temperatur der extrahierten Mischung erfolgt die Extraktion 2 - 3mal effizienter als bei normalem Atmosphärendruck und dauert nicht länger als 30 Minuten. Dann wird das Rühren im Extraktor 9 gestoppt. Das Heizmittel wird nicht mehr zugeführt. Während der folgenden 3 Stunden kühlt das Gemisch auf 70° C ab und wird abgesetzt. Dabei setzen sich die festen Fraktionen des Gemisches im unteren Teil des Extraktors 9 ab, während sich die Miscella im oberen Teil befindet. Danach wird die Miscella in den Vakuumverdampfer 11 (Fig. 1) abgeleitet, um das Gerstenöl 15 vom Ethanol zu trennen. Dann wird nach dem Entleeren der Miscella in den Extraktor 9 ein weiterer Extraktionszyklus bei einer Temperatur von 80° C für 10 Minuten durchgeführt. Ein weiterer Absetzzyklus erfolgt für drei Stunden. Danach wird die Miscella in den Vakuumverdampfer 11 abgelassen. Tabelle 3 zeigt den Fettgehalt des Produkts in jeder Stufe der Extraktion.

**Tabelle 3**

| Stufe der Extraktion | Fettgehalt Massenanteil pro Trockenprodukt |
|---|---|
| Vor der Extraktion | 11,8% |
| 1 | 4,3% |
| 2 | 0,6% |

Tabelle 3 zeigt, dass der Fettgehalt im Produkt nach 2 Stufen der Extraktion von 11,8 % auf 0,6 % sinkt und eine weitere Extraktion nicht ratsam ist.

Nach der Fettextraktion wird das im Extraktor 9 verbleibende Produkt bei einer Temperatur von 80° C innerhalb von 2 - 3 Stunden auf einen Feuchtigkeitsgehalt von 2 % getrocknet. Das verdampfte Ethanol wird im Extraktionskondensator 9 abgekühlt und in den Ethanoltank 12 zurückgeführt.

Nach dem Ablassen der Miscella aus dem Extraktor 9 in den Vakuumverdampfer 11 wird die Miscella auf eine Temperatur von 80° C und einen Druck von 0,9 bar aufgeheizt. Gleichzeitig wird die Miscella aktiv gekocht, um das Ethanol zu entfernen. Das Ethanol wird 1 - 2 Stunden lang verdampft, im Kondensator des Verdampfers 11 abgekühlt und in den Ethanoltank 12 überführt. So wird das Ethanol während der Extraktion fast vollständig zurückgewonnen. Der Verlust an Ethanol beträgt nicht mehr als 2 % pro vollem Ethanolumsatz im Prozess. Dies ermöglicht es, die Umwelt vor schädlichen Emissionen zu bewahren und eine hohe Wirtschaftlichkeit des Prozesses zu erreichen.

Das im Extraktor 9 getrocknete Produkt (Proteinkonzentrat und Proteinmehl) wird zur weiteren Verwendung in Vorratsbehälter für Proteinkonzentrat und Proteinmehl 10 (Fig. 1) überführt.

Die Analyse in Tabelle 4 und Tabelle 5 zeigt, dass die Endprodukte der vorgeschlagenen Technologie durch einen hohen Nährwert und eine reichhaltige Aminosäurezusammensetzung charakterisiert werden können, die mit der Aminosäurezusammensetzung von Biertreber identisch ist.

**Tabelle 4**

| Produkt | Protein-Konzentrat | Proteinmehl |
|---|---|---|
| Aminosäure % | | |
| Serin | 3,56 | 1,29 |
| Threonin | 2,98 | 1,03 |
| Prolin | 3,19 | 2,35 |
| Valin | 3,37 | 1,13 |
| Methionin | 2,02 | 0,44 |
| Isoleucin | 4,27 | 1,53 |
| Leucin | 7,63 | 2,68 |
| Histidin | 0,23 | 0,13 |
| Phenylalanin | 4,18 | 1,75 |
| Tyrosin | 2,18 | 0,58 |
| Lysin | 4,87 | 0,83 |
| Arginin | 1,65 | 1,78 |
| Alanin | 4,03 | 1,15 |
| Glycin | 4,98 | 1,05 |
| Cystein | 0,59 | 0,27 |
| Glutaminsäure | 5,78 | 5,29 |
| Asparaginsäure | 3,56 | 1,96 |
| Aminosäuren, gesamt | 59,07 | 25,24 |

**Tabelle 5**

| Produkt | Proteinkonzentrat | Proteinmehl |
|---|---|---|
| Protein | 71,7 | 25,9 |
| Fette | 0,54 | 1,47 |
| Faser, % | 2,8 | 14,9 |

Die Analyse in Tabelle 6 zeigt den Gehalt an den nützlichsten Fettsäuren: Linolsäure - 56,28 %, Ölsäure - 16,70 %.

**Tabelle 6**

| Fettsäuren | Wert |
|---|---|
| Myristinsäure C14 | 0,39 |
| Pentadecansäure C₁₅ | 0,11 |
| Palmitinsäure C_{16:0} | 23,47 |
| Palmitoleinsäure C_{16:1} | 0,23 |
| Stearinsäure C_{18:0} | 1,89 |
| Ölsäure C_{18:1} | 16,70 |
| Linolsäure C_{18:2} | 56,28 |
| Linolensäure C_{18:3} | 5,92 |
| Arachinsäure C_{20:0} | 0,37 |
| Eicosensäure (Gondosäure) C_{20:1} | 0,71 |
| Behensäure C_{22:0} | 0,54 |
| Lignocerinsäure C_{24:0} | 0,19 |

Die Gesamtverarbeitungszeit von 1000 kg Biertreber beträgt 8 Stunden. Die meiste Zeit nimmt der Absetzvorgang nach der Extraktion in Anspruch, nämlich 6 Stunden. Das nach dem beanspruchten Verfahren gewonnene Proteinkonzentrat und Proteinmehl zeichnet sich also durch einen hohen Proteingehalt sowie einen niedrigen Fett- und Ballaststoffgehalt aus.

### Beispiel 2

100 kg Biertreber (Feuchtigkeitsgehalt 85 % und eine Temperatur von 68° C) werden durch einen Mahlprozessor mit einer Kapazität von 4 Tonnen Getreide pro Stunde geleitet. Die Mahldauer einer Charge von 100 kg beträgt 90 - 100 Sekunden. Von dem am Ausgang der Mühle erhaltenen fein zerkleinerten Biertreber haben 90 % eine Korngröße von 0,5 - 1,0 mm. Die restlichen 10 % haben Größen von 0,01 bis 0,5 mm. Als nächstes wird die Pulpe mit Wasser in einem Durchlaufmischer gemischt. Dabei wird Wasser in einer Rate von 1 : 0,5 hinzugefügt, abhängig vom Feuchtigkeitsgehalt des anfänglichen Biertrebers. Das Gesamtvolumen an zusätzlichem Wasser beträgt 50 Liter. Das Mischen der Pellets mit Wasser in einem Durchlaufmischer dauert 20 Sekunden, das Wasser hat eine Temperatur von 22° C. Nach dem Mischen mit Wasser hat der entstandene homogene Brei einen Feuchtigkeitsgehalt von 90 % und eine Temperatur von 47° C.

### Beispiel 3

100 kg Biertreber (Feuchtigkeitsgehalt 88 % und eine Temperatur von 72° C) werden durch einen Mahlprozessor mit einer Kapazität von 4 Tonnen Getreide pro Stunde geleitet. Die Mahldauer einer Charge von 100 kg beträgt 90 - 100 Sekunden. Von dem am Ausgang der Mühle entstandenen fein zerkleinerten Biertreber weisen 92 % eine Korngröße von 0,45 - 1,0 mm auf. Die restlichen 8 % haben Abmessungen von 0,01 bis 0,45 mm.

Als nächstes wird der Zellstoff mit Wasser in einem Durchlaufmischer (3) gemischt. Dabei wird Wasser in einem Verhältnis von 1 : 0,4 zugegeben. Je nach Feuchtigkeitsgehalt des anfänglichen Biertrebers beträgt das Gesamtvolumen an zusätzlichem Wasser 30 Liter. Das Mischen der Pellets mit Wasser im Durchlaufmischer dauert 20 Sekunden, das Wasser hat eine Temperatur von 23° C. Nach dem Mischen mit Wasser hat der homogene Brei einen Feuchtigkeitsgehalt von 91 % und eine Temperatur von 56° C.

Insbesondere werden folgende Aspekte offenbart:
1. Proteinkonzentrat, Proteinmehl und Gerstenöl, die aus Biertreber gewonnen werden, dadurch gekennzeichnet, dass Proteinkonzentrat und Proteinmehl einen Feuchtigkeitsgehalt von nicht mehr als 2 % und eine Teilchengröße von nicht mehr als 0,2 mm aufweisen und Proteine, Fette und Ballaststoffe enthalten. Dabei beträgt der Proteingehalt im Proteinkonzentrat mindestens 70 % im Proteinmehl und mindestens 25 Gew.-% im Trockenrückstand. Gerstenöl weist einen Vitamin-E-Gehalt von mindestens 700 mg/100 ml auf.
2. Proteinkonzentrat nach Aspekt 1, dadurch gekennzeichnet, dass der quantitative Gehalt der Komponenten in dem Trockenrückstand (in Gew.-%) ist: Faser nicht mehr als 2,8; Fett nicht mehr als 0,54, während der Aminosäuregehalt nicht weniger als 71,7 ist.
3. Proteinmehl nach Aspekt 1, dadurch gekennzeichnet, dass der quantitative Gehalt der Komponenten in dem Trockenrückstand (in Gew.-%) ist: Faser nicht mehr als 14,9; Fett nicht mehr als 1,47, während der Aminosäuregehalt nicht weniger als 25,24 ist.
4. Gerstenöl nach Aspekt 1, dadurch gekennzeichnet, dass der quantitative Gehalt der Komponenten im Gerstenöl (in Gew.-%) ist: Linolsäure nicht weniger als 56,28 %, Ölsäure nicht weniger als 16,7 % sowie der Gehalt an Vitamin E nicht weniger als 700 mg/100 ml ist.
5. Verfahren zur Gewinnung von Proteinkonzentrat, Proteinmehl und Gerstenöl nach Aspekt 1, dadurch gekennzeichnet, dass die anfänglichen Biertreber auf einem Mahlprozessor gemahlen werden. Danach wird Wasser bis zu einem Feuchtigkeitsgehalt von nicht mehr als 93 % zugegeben. Dann wird die resultierende Masse in zwei Produkte geteilt, um Endprodukte zu erhalten: Proteinkonzentrat, das Protein mit mindestens 70 % auf die Trockenmasse enthält, und Proteinmehl mit mindestens 25 % Protein auf die Trockenmasse.
6. Verfahren zur Gewinnung von Gerstenöl nach Aspekt 1, dadurch gekennzeichnet, dass aus den beiden Endprodukten, Gerstenkonzentrat und Gerstenmehl, Fette extrahiert werden, um Gerstenöl mit einem Vitamin-E-Gehalt von mindestens 700 mg/100 ml zu erhalten.
7. Verfahren nach Aspekt 1, dadurch gekennzeichnet, dass die Nebenprodukte der vorgeschlagenen Technologie, Konzentrat und Kondensat, vollständig in das Verfahren zur Herstellung von Produkten aus Biertreber zurückgeführt werden.
8. Verfahren nach Aspekt 1, dadurch gekennzeichnet, dass bei der Extraktion von Fetten aus den fertigen Derivatprodukten aus Biertreber, Gerstenkonzentrat und Gerstenmehl ein Extraktor mit rotierenden Messern verwendet wird, der es ermöglicht, die Fettextraktion auf beschleunigte und effiziente Weise durchzuführen.
9. Verfahren nach Aspekt 1, dadurch gekennzeichnet, dass bei der Extraktion von Fetten aus den fertigen Derivatprodukten Biertreber, Gerstenkonzentrat und Gerstenmehl ein Extraktor verwendet wird, der die Möglichkeit bietet, das Produkt nach der Extraktion zu trocknen, ohne das Produkt zu überlasten.
10. Verfahren nach Aspekt 1, dadurch gekennzeichnet, dass bei der Extraktion von Fetten aus den fertigen Derivatprodukten Biertreber, Gerstenkonzentrat und Gerstenmehl ein Verfahren zur vollständigen Ethanolrückgewinnung eingesetzt wird.

## Patentansprüche

1. Verfahren zur Herstellung von Proteinkonzentrat und Proteinmehl aus Biertreber, umfassend:
a. Bereitstellen von Biertreber;
b. Mahlen des Biertrebers bis zu einer Korngröße von geringer als 1 mm, wobei in dem Verfahren bis zum Erreichen dieser Korngröße dem Biertreber nichts hinzugeben wird;
c. Zugabe von wässriger Flüssigkeit zu dem gemahlenen Biertreber;
d. Erhalten einer Suspension aus gemahlenem Biertreber und wässriger Flüssigkeit;
e. Trennen des unlöslichen Teils der Suspension von dem löslichen Teil der Suspension;
f. Verarbeiten des unlöslichen Teils zu einem Proteinmehl und Verarbeiten des löslichen Teils zu einem Proteinkonzentrat.

2. Verfahren gemäß Anspruch 1,
wobei Schritt 1.f ferner umfasst: Entzug der wässrigen Flüssigkeit aus dem löslichen Teil der Suspension und optionales Wiederverwenden der entzogenen Flüssigkeit in Schritt 1.c.

3. Verfahren gemäß einem der vorhergehenden Ansprüche,
wobei Schritt 1.f ferner umfasst: Entzug der wässrigen Flüssigkeit aus dem unlöslichen Teil der Suspension und optionales Wiederverwenden der entzogenen Flüssigkeit in Schritt 1.c.

4. Verfahren gemäß einem der vorhergehenden Ansprüche,
wobei bei der Durchführung des Verfahrens die Verwendung eines Homogenisators ausgeschlossen ist.

5. Verfahren zur Gewinnung von Gerstenöl aus Biertreber, umfassend:
Durchführen des Verfahrens gemäß der voranstehenden Ansprüche, wobei der Schritt gemäß Anspruch 1 f. ferner die Gewinnung von Gerstenöl aus dem unlöslichen und löslichen Teilen der Suspension aus Schritt e des Anspruchs 1) mit einem organischen Lösungsmittel umfasst.

6. Verfahren gemäß Anspruch 5,
wobei die Gewinnung von Gerstenöl aus dem unlöslichen und löslichen Teilen der Suspension mit einem organischen Lösungsmittel die Verwendung eines Extraktor mit rotierenden Messern umfasst.

7. Verfahren gemäß Anspruch 5,
wobei der Schritt gemäß Anspruch 1f ferner umfasst: Entzug des organischen Lösungsmittels aus der Lösung aus Lösungsmittel und Gerstenöl und optionales Wiederverwenden des entzogenen organischen Lösungsmittels in dem Schritt gemäß Anspruch 4.

8. Proteinkonzentrat erhältlich durch das Verfahren gemäß einem der vorstehenden Ansprüche.

9. Proteinkonzentrat gemäß Anspruch 8,
wobei das Proteinkonzentrat weniger als 2 Gew. % Flüssigkeit, einen Teilchendurchmesser von weniger als 0,2 mm, Fett, Ballaststoffe und/oder mindestens 70 Gew. % Protein aufweist.

10. Proteinkonzentrat gemäß Anspruch 8 oder 9,
wobei das Proteinkonzentrat, bezogen auf sein Trockengewicht, nicht mehr als 2,8 Gew. % Fasern, nicht mehr als 0,54 Gew. % Fett und/oder der Aminosäuregehalt nicht weniger als 71,7 Gew. % umfasst.

11. Proteinmehl erhältlich durch das Verfahren gemäß einem der Ansprüche 1 - 7.

12. Proteinmehl gemäß Anspruch 11,
wobei das Proteinmehl weniger als 2 Gew. % Flüssigkeit, einen Teilchendurchmesser von weniger als 0,2 mm, Fett, Ballaststoffe und/oder mindestens 25 Gew. % Protein aufweist.

13. Proteinmehl gemäß Anspruch 11 oder 12,
wobei das Proteinmehl bezogen auf sein Trockengewicht nicht mehr als 14,9 Gew. % Fasern, nicht mehr als 1,47 Gew. % Fett und/oder der Aminosäuregehalt nicht geringer als 25, 24 Gew. % ist.

14. Gerstenöl, erhältlich durch das Verfahren gemäß einem der Ansprüche 5 - 7.

15. Gerstenöl gemäß Anspruch 14,
wobei das Gerstenöl nicht weniger als 56,28 Gew. % Linolsäure, nicht weniger als 16,7 Gew. % Ölsäure und/oder nicht weniger als 700 mg/100 ml Vitamin E umfasst.
